# EUROPEAN PATENT SPECIFICATION

(11) **EP 3 226 118 B1**
(45) Date of publication and mention of the grant of the patent: **18.03.2020**
(21) Application number: 17162388.7
(22) Date of filing: 22.03.2017
(51) Int. Cl.: G06F 3/12

(54) **MULTIFUNCTION PERIPHERAL DEVICE INCLUDING PERIPHERAL COMPONENT INTERCONNECT (PCI) DEVICE CONNECTED TO PCI BUS, INFORMATION PROCESSING APPARATUS, METHOD FOR CONTROLLING INFORMATION PROCESSING APPARATUS, PROGRAM, AND STORAGE MEDIUM**
MULTIFUNKTIONSPERIPHERIEVORRICHTUNG MIT AN EINEM PCI-BUS ANGESCHLOSSENER PERIPHERER KOMPONENTENVERBINDUNGSVORRICHTUNG, INFORMATIONSVERARBEITUNGSVORRICHTUNG, VERFAHREN ZUR STEUERUNG EINER DATENVERARBEITUNGSVORRICHTUNG, PROGRAMM UND SPEICHERMEDIUM
DISPOSITIF PÉRIPHÉRIQUE MULTIFONCTION COMPRENANT UN DISPOSITIF D'INTERCONNEXION DE COMPOSANT PÉRIPHÉRIQUE (PCI) CONNECTÉ AU BUS PCI, APPAREIL DE TRAITEMENT D'INFORMATIONS, PROCÉDÉ DE COMMANDE D'APPAREIL DE TRAITEMENT D'INFORMATIONS, PROGRAMME ET SUPPORT D'INFORMATIONS

(30) Priority: 30.03.2016 JP 2016069173
(43) Date of publication of application: 04.10.2017
(73) Proprietor: Canon Kabushiki Kaisha, Tokyo 146-8501 (JP)
(72) Inventor: ITO, Akio, Ohta-ku, Tokyo (JP)
(74) Representative: Houle, Timothy James

(56) References cited:
- US-A1- 2010 005 479
- US-A1- 2014 181 559
- US-A1- 2015 116 768

## Description

### BACKGROUND OF THE INVENTION

### Field of the Invention

The present invention relates to a multifunction peripheral device including a peripheral component interconnect (PCI) device, an information processing apparatus, and a method for controlling the information processing apparatus.

### Description of the Related Art

Information processing apparatuses including personal computers and multifunction peripherals (MFPs) have an S0 state, an S3 state, and an S5 state which are defined by a standard relating to electric power control which is referred to as an "ACPI". The "ACPI" stands for "Advanced Configuration and Power Interface". The states having a prefix of "S" indicate electric power states of a system (a controller unit) of an information processing apparatus. The S0 state indicates an operation state, the S3 state indicates a sleep state which consumes less electric power than the operation state, and the S5 state indicates a power off state. In the S0 state, electric power is supplied to units included in the information processing apparatus. In the S3 state which is also referred to as a suspend state, a state of a central processing unit (CPU) of the controller unit and the like are saved in a memory and power supply to the CPU is stopped. In the S5 state, the power supply to the units included in the information processing apparatus is stopped.

When the power state of the system is in the S0 state, the CPU controls a device connected to the CPU through a PCI express (hereinafter referred to as "PCIe") bus (hereinafter referred to as a "PCI device") to be in a D0 state. Furthermore, when the system is in the S3 state, the CPU generally controls the PCI device to be in a D3 state. The D0 state and the D3 state indicate states of the PCI device. Specifically, the D0 state indicates an operation state of the PCI device, and the D3 state indicates a sleep state which consumes less electric power than the operation state of the PCI device. In the D3 state, power saving of the PCI device is realized by turning off the electric power supplied to units included in the PCI device or by stopping a clock signal.

In recent years, image processing apparatuses are capable of bringing a PCI device into the D3 state while a power state of a system is in the S0 state (refer to PCT Japanese Translation Patent Publication No. 2013-538385). The technique of bringing the PCI device into the D3 state while the system is in the S0 state is referred to as "Runtime D3".

US 2015/0116768 describes a wireless communication unit which includes a low-speed communication interface and a high-speed communication interface. Universal Serial Bus (USB) is employed as the high-speed communication system. Secure Digital Input/Output (SDIO) is employed as the low-speed communication system. The controller switches SDIO and USB according to a state of an image forming apparatus.

### SUMMARY OF THE INVENTION

In a multifunction peripheral device (MFP) having a large number of functions, such as copy, print, scan, and FAX, a plurality of power modes are defined in the S0 state of an electric power state of a system (a control unit). In a print mode in which printing is executed, although electric power is to be supplied to a printer unit and a CPU which controls the printer unit, the electric power is not to be supplied to a scanner unit. Furthermore, in a scan mode in which reading of a document is executed, although electric power is to be supplied to the scanner unit and the CPU which controls the scanner unit, the electric power is not to be supplied to the printer unit. In a waiting/responding mode in which a packet process is performed on a packet transmitted from an external apparatus, electric power is to be supplied to the CPU which executes the packet process and a network interface which performs transmission and reception of the packet. However, the electric power is not to be supplied to the printer unit or the scanner unit. In this way, the multifunction device including the MFP as a representative has a plurality of power modes, such as the print mode, the scan mode, and the waiting/responding mode, even in the S0 state in which electric power is supplied to the CPU.

If the Runtime D3 technique is uniformly employed irrespective of the plurality of power modes described above when the power state of the system is the S0 state, problems arise. That is, in a mode in which excellent responsiveness of a print process and a scan process is required when the MFP receives an instruction from a user, if the PCI device is brought into the D3 state, responsiveness is degraded by a period of time required when the PCI device returns to the D0 state. On the other hand, in a case of the waiting/responding mode in which supply of electric power to the printer unit and the scanner unit is stopped since power saving is more preferential than the responsiveness, if the PCI device is maintained in the D0 state, power saving of the PCI device is not attained.

Aspects of the present invention are set out by the independent claims. Accordingly, the present invention is to perform electric power control on a PCI device based on a power mode of a multifunction peripheral.

The present invention in its first aspect provides a multifunction peripheral device as specified in claims 1 to 9.

The present invention in its second aspect provides an information processing apparatus as specified in claims 10 to 17.

The present invention in its third aspect provides a method for controlling an information processing apparatus as specified in claim 18.

The present invention in its fourth aspect provides a program as specified in claim 19.

The present invention in its fifth aspect provides a program as specified in claim 20.

The present invention in its sixth aspect provides a computer-readable storage medium as specified in claim 21.

Further features of the present invention will become apparent from the following description of exemplary embodiments with reference to the attached drawings.

### BRIEF DESCRIPTION OF THE DRAWINGS

Fig. 1 is a block diagram illustrating an entire configuration of a multifunction peripheral (MFP).
Fig. 2 is a block diagram illustrating a power source unit in detail.
Fig. 3 is a block diagram illustrating a controller unit in detail.
Fig. 4 is a block diagram illustrating a CPU and PCI devices connected to the CPU in detail.
Fig. 5 is a block diagram of software.
Fig. 6 is a diagram illustrating power states of the MFP.
Fig. 7A is a diagram illustrating an active state in a waiting/responding mode.
Fig. 7B is a diagram illustrating a low power state in the waiting/responding mode.
Figs. 8A to 8C are flowcharts illustrating processes of a power source control application.
Fig. 9 is a flowchart illustrating a process of device drivers of the PCI devices.

### DESCRIPTION OF THE EMBODIMENTS

### First Embodiment

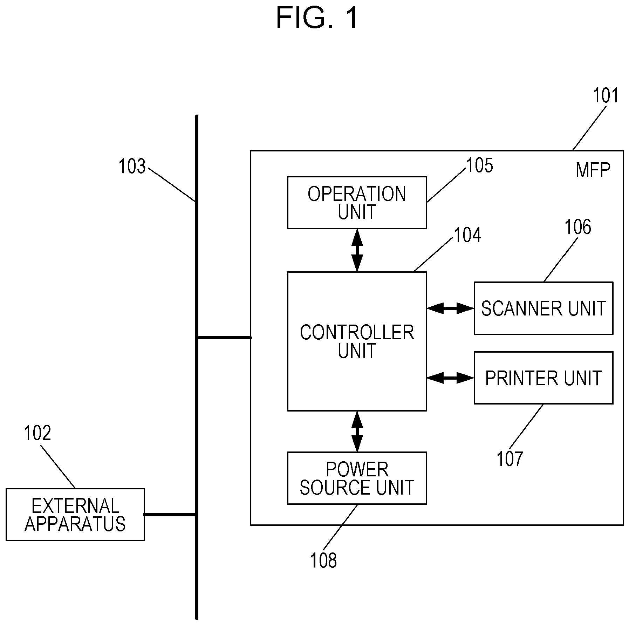

Fig. 1 is a block diagram schematically illustrating a configuration of a MFP 101.

The MFP 101 is connected to an external apparatus 102 through a network 103. The network 103 is Ethernet (registered trademark), for example. The external apparatus 102 is a personal computer and connected to the MFP 101 in a communication available manner. The MFP 101 may execute a plurality of functions including a copy function, a print function, a scan function, and a FAX function.

The MFP 101 includes a controller unit 104, an operation unit 105, a scanner unit 106, a printer unit 107, and a power source unit 108. The operation unit 105, the scanner unit 106, and the printer unit 107 are functional units which execute the functions of the MFP 101, and the controller unit 104 is a control unit which controls the functional units.

The operation unit 105 includes hard keys including a numeric keypad to be used by a user to input the number of sheets to be printed or the like, a start key used to perform an instruction for executing start of printing, and a power saving key to be used to bring the MFP 101 into a sleep mode. Furthermore, the operation unit 105 includes a display unit which displays various information. This display unit is a touch panel type display unit.

The scanner unit 106 scans an image of a document, converts the scanned image into digital data, and outputs the digital data to the controller unit 104.

The printer unit 107 forms an image on a sheet in accordance with the image data processed by the controller unit 104.

The power source unit 108 converts an alternating-current (AC) voltage input through a power source plug 208 into a direct-current (DC) voltage. The power source unit 108 supplies the converted DC voltage to the units included in the MFP 101.

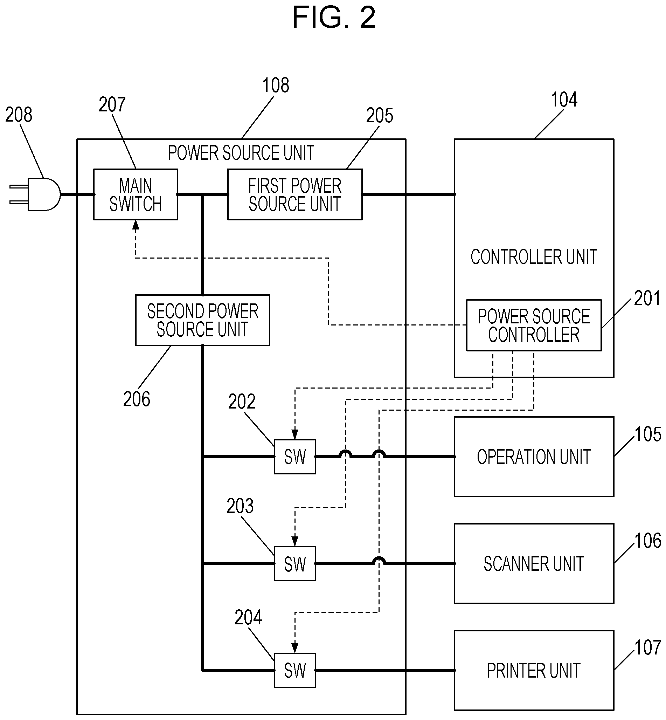

Fig. 2 is a block diagram illustrating the power source unit 108 in detail.

An AC voltage is supplied to the power source unit 108 through the power source plug 208. The AC voltage supplied through the power source plug 208 is further supplied to first and second power source units 205 and 206. The first power source unit 205 generates a DC voltage of approximately 5.0 V from the AC voltage, for example. The second power source unit 206 generates a DC voltage of approximately 24.0 V from the AC voltage, for example.

The DC voltage generated by the first power source unit 205 is supplied to the controller unit 104. The DC voltage generated by the second power source unit 206 is supplied to the operation unit 105, the scanner unit 106, and the printer unit 107.

A main switch 207 is disposed between the power source plug 208 and the first and second power source units 205 and 206. The main switch 207 is a rocker switch and is turned on or off in accordance with a user operation.

Furthermore, a relay switch 202 is disposed between the second power source unit 206 and the operation unit 105. A relay switch 203 is disposed between the second power source unit 206 and the scanner unit 106. A relay switch 204 is disposed between the second power source unit 206 and the printer unit 107.

A power source controller 201 of the controller unit 104 is capable of bringing the main switch 207 into an off state from an on state by driving a solenoid, not illustrated. The power source controller 201 may turn on or off each of the relay switches 202 to 204.

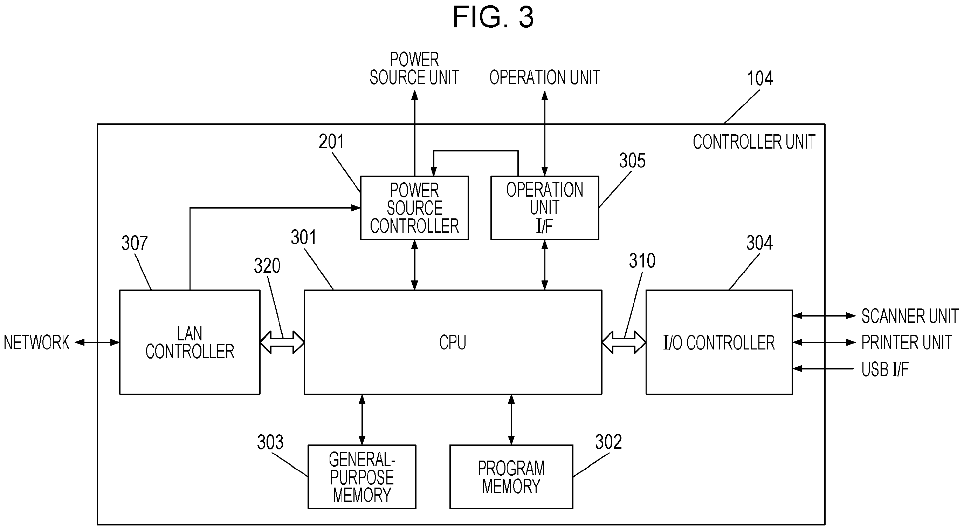

Fig. 3 is a block diagram illustrating the controller unit 104 in detail.

The controller unit 104 includes a CPU (processor) 301 (information processing apparatus), a program memory 302, a general-purpose memory 303, an I/O controller 304, an operation unit interface 305, a LAN controller 307, and the power source controller 201.

The CPU 301 (processing means) is connected to the I/O controller 304 through a PCIe bus 310 in a communication available manner. Furthermore, the CPU 301 is connected to the LAN controller 307 through a PCIe bus 320 in a communication available manner. The PCIe buses 310 and 320 conform to the PCI Express standard, and the I/O controller 304 and the LAN controller 307 are PCI devices compatible with the PCI Express standard.

The CPU 301 includes an interface circuit used to communicate with peripherals and executes programs stored in the program memory 302, such as a flash memory. The program memory 302 stores programs and control data to be used to control the MFP 101. The CPU 301 develops a program loaded from the program memory 302 in the general-purpose memory 303. The general-purpose memory 303 is used as a work memory of the CPU 301 and stores image data and the like to be used to execute copying, scanning, and printing.

The I/O controller 304 is a processor which performs image processing and is connected to the scanner unit 106 and the printer unit 107 in a communication available manner. The I/O controller 304 performs image processing on image data corresponding to an image of a document read by the scanner unit 106 and image processing on image data corresponding to an image to be printed by the printer unit 107.

The operation unit interface 305 is used to connect the operation unit 105 and the CPU 301 to each other. The operation unit interface 305 transmits information on an operation on a key of the operation unit 105 and an operation on a touch panel of the operation unit 105 to the CPU 301. Furthermore, the operation unit interface 305 transmits screen data to be displayed in the display unit of the operation unit 105 to the operation unit 105.

The LAN controller 307 is a network control unit used to communicate with the external apparatus 102 connected to the network 103.

The power source controller 201 is a logic circuit which controls power supply to the units included in the MFP 101. The power source controller 201 detects a signal input from the operation unit 105 through the operation unit interface 305 and a signal input from the network 103 through the LAN controller 307 and causes the MFP 101 to return from a sleep mode. Examples of an interrupt signal input to the power source controller 201 include a signal supplied from a sensor which detects a recording sheet to be subjected to printing performed by the printer unit 107, a signal supplied from a sensor which detects a document to be read by the scanner unit 106, and a signal supplied from a human body detection sensor.

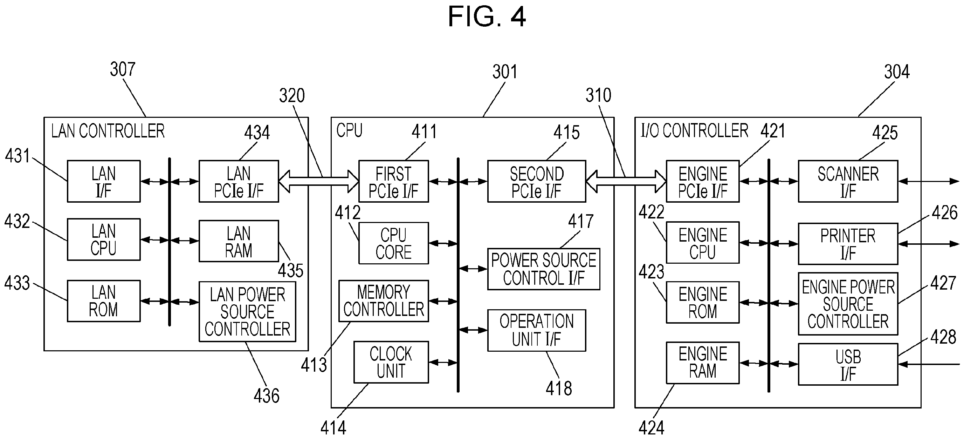

Fig. 4 is a block diagram illustrating the CPU 301, the I/O controller 304, and the LAN controller 307 in detail.

The CPU 301 includes a first PCIe I/F 411, a CPU core 412, a memory controller 413, a clock unit 414, a second PCIe I/F 415, a power source control I/F 417, and an operation unit I/F 418. The first PCIe I/F 411 is used for communication with the LAN controller 307 through the PCIe bus 320. The CPU core 412 executes various processes. A single CPU core or a multi CPU core may be used as the CPU core 412. The memory controller 413 controls writing of data to the general-purpose memory 303 and reading of data from the general-purpose memory 303. The clock unit 414 is an integrated circuit (IC) which measures a current time. The second PCIe I/F 415 is used for communication with the I/O controller 304 through the PCI bus 310. The power source control I/F 417 is used for communication with the power source controller 201. The operation unit I/F 418 is used for communication with the operation unit 105. Each of the PCIe I/Fs 411 and 415 performs data transmission and reception in accordance with the PCI Express.

The I/O controller 304 includes an engine PCIe I/F 421, an engine CPU 422, an engine ROM 423, an engine RAM 424, a scanner I/F 425, a printer I/F 426, an engine power source controller 427, and a USB I/F 428.

The I/O controller 304 which is a PCI device connected to the main CPU 301 through the PCIe bus 310 may be brought into a D0 state or a D3 state which consumes less electric power than the D0 state. The I/O controller 304 is compatible with Runtime D3 and may be brought into the D3 state while the controller unit 104 is in the S0 state. The D0 state is in an active state in which electric power is supplied to all the blocks in the I/O controller 304. On the other hand, the D3 state is in a state in which power supply to some of the blocks included in the I/O controller 304 is stopped or a clock supply is stopped. Note that, in the D3 state, a clock frequency to be supplied to some of the blocks included in the I/O controller 304 may be low. The engine power source controller 427 controls electric power in the I/O controller 304 with reference to a value of a register, not illustrated, included in the I/O controller 304. The register is included in the engine PCIe I/F 421, and the second PCIe I/F 415 of the CPU 301 writes a value of the register.

The LAN controller 307 includes a LAN I/F 431, a LAN CPU 432, a LAN ROM 433, a LAN PCIe I/F 434, a LAN RAM 435, and a LAN power source controller 436. The LAN controller 307 which is a PCI device may also be brought into the D0 state and the D3 state. The D0 state is an active state in which electric power is supplied to all the blocks included in the LAN controller 307. Furthermore, the D3 state is a state in which power supply to some of the blocks included in the LAN controller 307 is stopped or a clock supply is stopped. Note that, in the D3 state, a clock frequency to be supplied to some of the blocks included in the LAN controller 307 may be low.

The LAN power source controller 436 controls electric power in the LAN controller 307 with reference to a value of a register, not illustrated, included in the LAN controller 307. The register is included in the LAN PCIe I/F 434, and the first PCIe I/F 411 of the CPU 301 writes a value of the register.

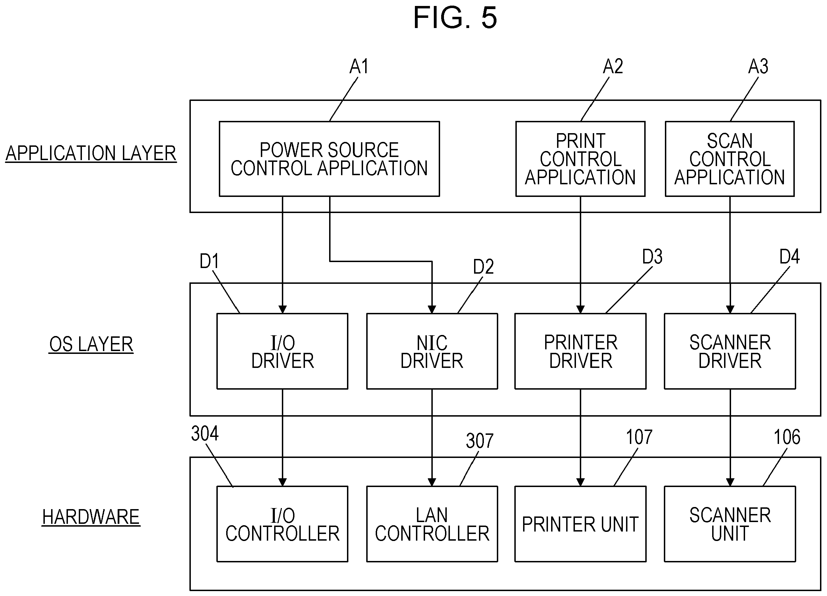

Fig. 5 is a software block diagram illustrating a configuration of software of the MFP 101.

A power source control application A1 which is software which performs power control of the MFP 101 operates in an application layer. The power source control application A1 periodically transmits an inquiry about an execution state of a job or the like to a print control application A2 or a scan control application A3 which operate in the application layer. Then the power source control application A1 controls a power mode of the MFP 101 in accordance with the job execution state or the like. The CPU 301 which executes the power source control application A1 accesses the power source controller 201 so as to change a power mode of the MFP 101. In this embodiment, the power source control application (power mode controller) A1 notifies device drivers D1 and D2 (device controllers) of the power mode of the MFP 101.

The I/O driver D1 which controls operation of the I/O controller 304 is a device driver and operates in an operating system (OS) layer. Furthermore, the network interface card (NIC) driver D2 which controls operation of the LAN controller 307 is also a device driver and operates in the OS layer. Furthermore, the printer driver D3 which controls operation of the printer unit 107 and the scanner driver D4 which controls the operation of the scanner unit 106 also operate in the OS layer.

Although description is omitted here, software other than the software described above is also executed in the application layer or the OS layer. Examples of the software operating in the application layer or the OS layer include a memory controller which controls the general-purpose memory 303 and a graphic driver which controls display of the display unit included in the operation unit 105.

Here, a method for changing the D0 state to the D3 state of a PCI device employed in a device driver will be described. In this embodiment, the I/O driver D1 and the NIC driver D2 bring the I/O controller 304 and the LAN controller 307, respectively, into the D0 state or the D3 state.

First, a method for bringing a PCI device from the D0 state to the D3 state employed in a device driver will be described.
1. The device driver detects an idling state of the PCI device.
2. The device driver activates an idling timer.
3. The device driver stops the idling timer when the PCI device is brought into an active state.
4. After measuring a predetermined period of time, the idling timer transmits a notification to the device driver.
5. The device driver writes information indicating the D3 state in a power management control/status register (PMCSR) included in the PCI device.
6. The power controller included in the PCI device stops power supply to units included in the PCI device, stops a clock supply, or lowers a clock frequency with reference to the PMCSR.

Next, a method for bringing the PCI device from the D3 state to the D0 state employed in the device driver will be described.
1. The device driver detects an active state of the PCI device.
2. The device driver writes information indicating the D0 state in the PMCSR included in the PCI device.
3. The power controller included in the PCI device restarts power supply to the units included in the PCI device, restarts the clock supply, or restores the clock frequency with reference to the PMCSR.

The PMCSR is included in a PCIe I/F of the PCI device, and the PCIe I/F of the CPU 301 updates a value of the PMCSR. The CPU 301 only updates a value of the register (PMCSR) of the PCI device so as to change a state of the PCI device. This is because, after the value of the register is updated, the PCI device itself performs power supply and clock control in the PCI device.

The device drivers of this embodiment control power states of the corresponding PCI devices in accordance with power modes transmitted from the power source control application A1. Specifically, the I/O driver D1 maintains the I/O controller 304 in the D0 state if the power mode of the MFP 101 notified by the power source control application A1 is a standby mode. The I/O driver D1 changes a state of the I/O controller 304 between the D0 state and the D3 state if the power mode of the MFP 101 notified by the power source control application A1 is a waiting/responding mode. The NIC driver D2 also maintains the LAN controller 307 in the D0 state if the power mode of the MFP 101 notified by the power source control application A1 is a standby mode. The NIC driver D2 changes a state of the LAN controller 307 between the D0 state and the D3 state if the power mode of the MFP 101 notified by the power source control application A1 is a waiting/responding mode.

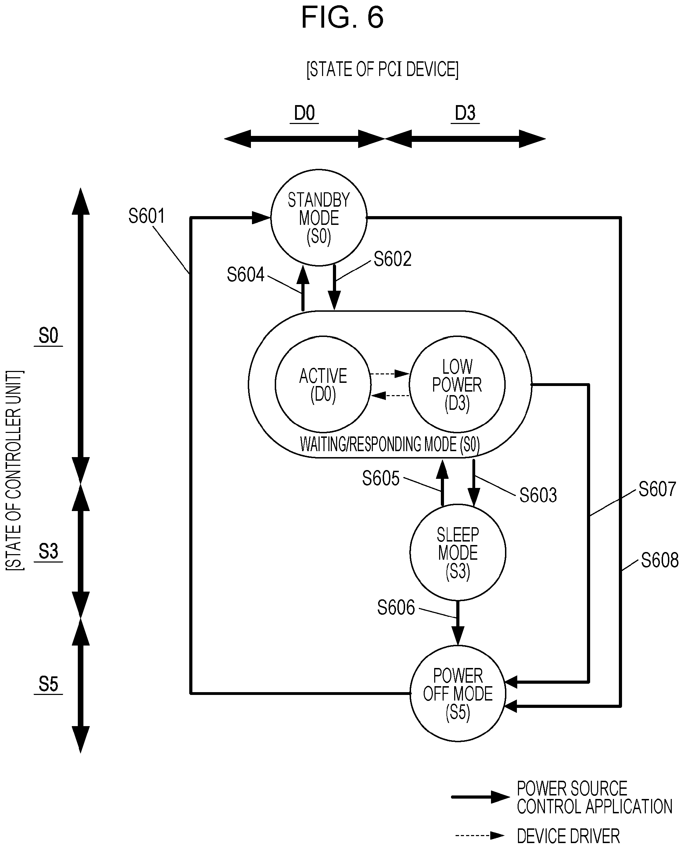

Fig. 6 is a diagram illustrating power states of the MFP 101.

The MFP 101 of this embodiment may be brought into the S0 state (a standby state), the S3 state (a sleep state), and the S5 state (a power off state) which are defined by the ACPI. In this embodiment, a state in which electric power is supplied to the CPU 301 which is the main CPU of the MFP 101 is defined as the S0 state. A state in which the power supply to the CPU 301 is stopped but the electric power is supplied to the general-purpose memory 303 which is a main memory is defined as the S3 state. A state in which the power supply to the units included in the MFP 101, such as the CPU 301 and the general-purpose memory 303, is stopped is defined as the S5 state.

Furthermore, the PCI devices of the MFP 101 of this embodiment may be brought into the D3 state even while the controller unit 104 is in the S0 state.

### [S0 State]

The MFP 101 has the S0 state in which the controller unit 104 is in a standby state. The MFP 101 having the functional units including the printer unit 107 and the scanner unit 106 has a mode in which power supply to the peripherals (the printer unit 107 and the scanner unit 106) is stopped while electric power is supplied to the CPU 301 (S0 state). When a print process is to be executed, for example, although power supply to the CPU 301 and the printer unit 107 is required, power supply to the scanner unit 106 is not required. On the other hand, when a scan process is to be executed, although power supply to the CPU 301 and the scanner unit 106 is required, power supply to the printer unit 107 is not required. Furthermore, to response to an inquiry from the external apparatus 102, although power supply to the CPU 301 is required, power supply to the printer unit 107 and the scanner unit 106 is not required.

In this embodiment, the MFP 101 has, in the S0 state of the controller unit 104, a standby mode (S0) in which electric power is supplied to the printer unit 107 and the scanner unit 106 and a waiting/responding mode (S0) in which power supply to the printer unit 107 and the scanner unit 106 is stopped. When the MFP 101 is in the standby mode, electric power is supplied to the units (the controller unit 104, the operation unit 105, the scanner unit 106, and the printer unit 107) included in the MFP 101. On the other hand, when the MFP 101 is in the waiting/responding mode, although electric power is supplied to the controller unit 104 of the MFP 101, electric power is not supplied to the scanner unit 106 and the printer unit 107 of the MFP 101. In the waiting/responding mode, the PCI devices are brought into the D0 state or the D3 state.

The power supply to the CPU 301 is not stopped in the waiting/responding mode (S0) since excellent responsiveness of communication with the external apparatus 102 through the network 103 is attained. In recent years, the number of external apparatuses 102 including a PC, a server, and a mobile terminal, connected to the network 103 is increased, and therefore, the MFP 101 requires reduction of a period of time required for a process of communication with such external apparatuses 102. This is because the MFP 101 performs various communications including transmission of information on a toner remaining amount, information on a sheet remaining amount, information on a sheet jam, information on generation of an error, confirmation of a version of a software program, information on version up, and download of a new program.

In general, a PCI device is brought into a D0 state in the S0 state of the controller unit 104, and the PCI device is brought into the D3 state in the S3 state of the controller unit 104. In recent years, a technique, referred to as Runtime D3, of bringing a PCI device into the D3 state while the controller unit 104 is in the S0 state has been realized. Therefore, Runtime D3 is realized also in the MFP 101 of this embodiment. Although the MFP 101 executes Runtime D3 in the waiting/responding mode in the S0 state, the MFP 101 does not execute Runtime D3 in the standby mode. Specifically, in the standby mode, the PCI device is not brought into the D3 state but maintained in the D0 state.

In the S3 state, the PCI device is brought into the D3 state. When the I/O controller 304 is brought into the D3 state, the engine PCIe I/F 421, the engine CPU 422, the engine ROM 423, the engine RAM 424, the scanner I/F 425, the printer I/F 426, and the USB I/F 428 are brought into a power saving state. Furthermore, when the LAN controller 307 is brought into the D3 state, the LAN PCIe I/F 434, the LAN CPU 432, the LAN ROM 433, and the LAN RAM 435 are brought into a power saving state.

### [S3 State]

In the S0 state, electric power is supplied to the CPU 301 of the controller unit 104. The MFP 101 enters the S3 state for power saving. The S3 state is also referred to as a "suspend state". In the S3 state, the power supply to the CPU 301 is stopped so that power saving of the MFP 101 is realized. In the S3 state, a state of the CPU 301 and the like is saved in the general-purpose memory 303, and the general-purpose memory 303 is brought into a self-refresh mode. The state is resumed using the information saved in the general-purpose memory 303 so as to return from the S3 state. In this way, high speed return is realized when compared with a case where the MFP 101 is activated using a boot ROM.

In the S3 state, the PCI device is brought into the D3 state. When the I/O controller 304 is brought into the D3 state, the engine PCIe I/F 421, the engine CPU 422, the engine ROM 423, the engine RAM 424, the scanner I/F 425, the printer I/F 426, and the USB I/F 428 are brought into a power saving state. Furthermore, when the LAN controller 307 is brought into the D3 state, the LAN PCIe I/F 434, the LAN CPU 432, the LAN ROM 433, and the LAN RAM 435 are brought into a power saving state.

### [S5 State]

When the main switch 207 is turned off, the S5 state is entered so that the power supply to the MFP 101 is stopped. In the S5 state, power supply to the general-purpose memory 303, in addition to the CPU 301, is also stopped.

Next, transition of a power state will be described in detail.

### [S601: S5 State to S0 State]

In the power off mode (S5), the main switch 207 which is a power source switch of the MFP 101 is turned off and power supply to the units is stopped. When the main switch 207 is turned on, the standby mode (S0) is entered. In the standby mode (S0), electric power is supplied to all the units of the MFP 101 and various jobs including copying and printing are being executed or the various jobs are ready to be executed.

### [S602: S0 State (Standby Mode) to S0 State (Waiting/Responding Mode)]

In the waiting/responding mode (S0), the relay switches 202 to 204 of the power source unit 108 are turned off, and power supply to the scanner unit 106, the printer unit 107, and the operation unit 105 is stopped. On the other hand, the first power source unit 205 supplies electric power to the controller unit 104 and a portion of the operation unit 105. Both of the standby mode and the waiting/responding mode correspond to the S0 state.

Conditions for transition from the standby mode (S0) to the waiting/responding mode (S0) is illustrated in Table 1.

**Table 1**

| Conditions for Transition from Standby Mode (S0) to Waiting/Responding Mode (S0) | |
|---|---|
| Transition Conditions | Description |
| Lapse of Time | A predetermined period of time has elapsed. |
| Pressing on Switch of Operation Unit | A power saving switch of the operation unit 105 is pressed. |
| Time setting | Set time has been reached. |

When satisfying one of the conditions including the lapse of time, the pressing on a switch of the operation unit, and a time setting, the MFP 101 is brought into the waiting/responding mode (S0) from the standby mode (S0) .

The lapse of time which is one of the transition conditions in Table 1 indicates a case where an elapsed time after an operation on the operation unit 105 is terminated or after a job is terminated exceeds a predetermined period of time. The predetermined period of time may be set by the user in a range from several minutes to several hours. The pressing on the switch of the operation unit indicates a case where the user has pressed a power saving key (not illustrated) of the operation unit 105. The time setting indicates a case where a time point set by the user in advance has been reached.

### [S603: S0 State to S3 State]

The sleep mode (S3) is entered when power supply to the CPU 301 and the I/O controller 304 is stopped in the power state of the waiting/responding mode (S0). The sleep mode (S3) is a low power state in which electric power is supplied only to important portions so that the MFP 101 is ready to return from the sleep mode (S3) to the standby mode (S0) or the waiting/responding mode (S0). The S3 state is different from the S0 state in that the power supply to the CPU 301 is stopped. Specifically, in the sleep mode (S3), electric power is supplied only to the general-purpose memory 303, the operation unit interface 305, the power source controller 201, and the LAN controller 307 illustrated in Fig. 3. Furthermore, the general-purpose memory 303 is brought into the refresh mode. The LAN controller 307 responds to an inquiry from the external apparatus 102 while the power supply to the CPU 301 is stopped as long as the LAN controller 307 may cope with the inquiry. This operation is referred to as a "proxy response". Note that, in the sleep mode (S3), the LAN controller 307 and the I/O controller 304 which are the PCI devices are in the D3 state.

Conditions for transition from the waiting/responding mode (S0) to the sleep mode (S3) are illustrated in Table 2.

**Table 2**

| Conditions for Transition from Waiting/Responding Mode (S0) to Sleep Mode (S3) | |
|---|---|
| Transition Conditions | Description |
| Lapse of time | A predetermined period of time has elapsed. |
| Termination of Job Process Other Than Printing | A process for an inquiry is terminated after the inquiry is received from the external apparatus 102 and the waiting/responding mode (S0) is entered from the sleep mode (S3). |

The MFP 101 is brought into the sleep mode (S3) from the waiting/responding mode (S0) when satisfying one of the conditions including the lapse of time and the termination a job process other than the printing.

The lapse of time which is the transition condition in Table 2 indicates a case where an elapsed time after execution of a job is completed exceeds a predetermined period of time. The predetermined period of time may be set by the user in a range from several minutes to several hours. The termination of a job process other than the printing indicates a case where a response to the inquiry from the external apparatus 102 through the network 103 is terminated.

### [S604: S0 State (Waiting/Responding Mode) to S0 State (Standby mode)]

Conditions for return from the waiting/responding mode (S0) to the standby mode (S0) are illustrated in Table 3.

**Table 3**

| Conditions for Return from Waiting/Responding Mode (S0) to Standby Mode (S0) | |
|---|---|
| Return Conditions | Description |
| Pressing on Switch of Operation Unit | A power saving switch of the operation unit 105 is pressed. |
| Job Reception | A print job etc. is received from the network. |
| Time Setting | A set time has been reached. |
| Detection of USB device | A USB device is detected in a USB interface or the USB device detects a return cause. |

When satisfying one of the conditions including the pressing on the switch of the operation unit, the job reception, the time setting, and the detection of a USB device, the MFP 101 is brought into the standby mode (S0) from the waiting/responding mode (S0).

The pressing on the switch of the operation unit which is one of the return conditions in Table 3 indicates a case where the user has pressed the power saving key (not illustrated) of the operation unit 105. When the power saving key is pressed by the user, a signal from the power saving key of the operation unit 105 is detected by the CPU 301 through the operation unit interface 305. Furthermore, the job reception indicates that a print job is received from the external apparatus 102 through the network 103. The time setting indicates a case where a current time measured by the clock unit 414 matches a preset time. The detection of a USB device indicates a case where a USB device connected to the USB I/F 428 is detected or a case where a USB device which has been connected detects a return cause. Examples of the return cause detected by the USB device include a detection of a card by an authentication card reader which is a USB device and a detection of a person by a camera device or a human detection sensor which is a USB device. The return conditions may further include, in addition to the conditions described above, a case where a document detection sensor of the scanner unit 106 detects a document placed on a document glass and a case where the document detection sensor detects a sheet placed on a manual feeding sheet tray of the printer unit 107.

### [S605: S3 State to S0 State]

Conditions for return from the sleep mode (S3) to the waiting/responding mode (S0) or the standby mode (S0) is illustrated in Table 4.

**Table 4**

| Conditions for Return from Sleep Mode (S3) To Waiting/Responding Mode (S0) Or Standby Mode (S0) | |
|---|---|
| Return Conditions | Description |
| Pressing on Switch of Operation Unit | The power saving switch of the operation unit 105 is pressed. |
| Reception of Print Job | A print job is received from the network. |
| Reception of Job Other Than Printing | A job in which printing is not performed or an inquiry is received from the network. |
| Time Setting | A set time has been reached. |

When satisfying one of the conditions including the pressing on the switch of the operation unit, the reception of a print job, the reception of a job other than printing, and the time setting, the MFP 101 is brought into the waiting/responding mode (S0) from the sleep mode (S3).

The pressing on the switch of the operation unit which is one of the return conditions in Table 4 indicates a case where the user has pressed the power saving key (not illustrated) of the operation unit 105. When the power saving key is pressed by the user, a signal from the power saving key of the operation unit 105 is detected by the CPU 301 through the operation unit interface 305. The reception of a print job indicates that a print job is received from the external apparatus 102 through the network 103. The time setting indicates a case where a current time measured by the clock unit 414 matches a preset time. The reception of a job other than printing indicates a case where a job (an inquiry job) for inquiry of information on the MFP 101 (hereinafter referred to as "device information") from the external apparatus 102 through the network 103, which is an inquiry job to which the LAN controller 307 may not respond as the proxy response, is received.

When one of the return conditions is detected in the sleep mode (S3), an interrupt signal is supplied to the power source controller 201. When the interrupt signal is supplied, the power source controller 201 performs control such that electric power is supplied to the CPU 301 and the program memory 302. The CPU 301 which received the supplied electric power performs a resume process using the information saved in the general-purpose memory 303. Furthermore, the power source controller 201 supplies electric power to the functional units in accordance with a type of interrupt signal. Specifically, when the interrupt signal associated with the print job is input, the power source controller 201 supplies electric power to the printer unit 107 in addition to the CPU 301 and the general-purpose memory 303. On the other hand, although the power source controller 201 supplies electric power to the CPU 301 and the general-purpose memory 303 when an inquiry is received, when the power saving key is pressed, and when the set time has been reached, the power source controller 201 does not supply the electric power to the printer unit 107.

### [S606: S3 State to S5 State]

Conditions for transition from the sleep mode (S3) to the power off mode (S5) is illustrated in Table 5.

**Table 5**

| Conditions for Transition from Sleep Mode (S3) to Power Off Mode (S5) | |
|---|---|
| Return Conditions | Description |
| Pressing on Main Switch | The main switch is pressed. |
| Lapse of time | A predetermined period of time has elapsed in the sleep mode. |

When satisfying one of the conditions including the pressing on the main switch and the lapse of time, the MFP 101 returns to the power off mode (S5) from the sleep mode (S3).

The pressing on the main switch included in the return conditions in Table 5 indicates that the user brings the main switch 207 into an off state. Furthermore, the lapse of time indicates a case where a predetermined period of time has elapsed in the sleep mode (S3). The predetermined period of time may be set by the user in a range from several minutes to several hours.

### [S607 and S608: S0 State to S5 State]

In a case where the user brings the main switch 207 into an off state when the MFP 101 is in the S0 state, the MFP 101 is brought into the power off mode (S5). Note that the power off mode (S5) may be in a suspend state (S3 of the ACPI standard) or in a hibernation state (S4 of the ACPI standard).

Next, power control of the PCI device will be described.

In this embodiment, examples of the PCI device include the I/O controller 304 and the LAN controller 307 connected to the CPU 301 through the PCIe bus 310 and the PCIe bus 320, respectively. In this embodiment, the PCI device is compatible with Runtime D3, and a state of the PCI device may be changed between the D0 state and the D3 state while the controller unit 104 is in the S0 state. In a case where the MFP 101 is in the standby mode (S0), the PCI device is maintained in the D0 state and may not enter the D3 state in this embodiment. In a case where the MFP 101 is in the waiting/responding mode (S0), the state of the PCI device is changed between the D0 state and the D3 state.

Fig. 6 is a diagram illustrating the correspondence between a power mode of the MFP 101 and a power state of the PCI device. As illustrated in Table 6, the MFP 101 controls a power state of the PCI device based on a power mode of the MFP 101.

**Table 6**

| Power State of PCI Device (I/O Controller 304 and LAN Controller 307) | | | |
|---|---|---|---|
| | | Power States of Device | |
| | | D0 | D3 |
| Power Mode of MFP 101 | Standby Mode | ○ | × |
| | Waiting/Responding Mode | Response | ○ |
| | Sleep Mode | × | ○ |
| | Power Off Mode | off | off |

As illustrated in Table 6, the PCI device is brought into the D0 state when the power mode of the MFP 101 is the standby mode (S0), whereas the PCI device is brought into the D3 state when the power mode of the MFP 101 is in the sleep mode (S3). Furthermore, when the power mode of the MFP 101 is in the power off state (S5), power supply to the PCI device is stopped.

As described above, according to this embodiment, in a case where the MFP 101 is in the standby mode (S0), the PCI device connected through the PCIe bus may not be brought into the D3 state in this embodiment. The PCI device of this embodiment supports Runtime D3 in which the D3 state is entered in the S0 state. Note that, in this embodiment, the PCI device remains in the D0 state in the standby mode (S0) so that responsiveness at a time of job execution is enhanced.

In a case where the MFP 101 is in the waiting/responding mode (S0), the state of the PCI device is changed between the D0 state and the D3 state in this embodiment. The D0 state of the PCI device in the waiting/responding mode (S0) is the same as the D0 state of the PCI device in the standby mode (S0). Note that, unlike the standby mode (S0), power supply to the scanner unit 106 and the printer unit 107 is stopped in the waiting/responding mode (S0).

In Table 7, a condition for changing a state of the PCI device from the D0 state to the D3 state in the waiting/responding mode (S0) is illustrated.

**Table 7**

| Transition Condition of PCI device (Waiting/Responding Mode) | |
|---|---|
| Transition Condition | Description |
| Lapse of time | A power mode of the MFP 101 is the waiting/responding mode, and a predetermined period of time has elapsed while the PCI device is in an idling state. |

The transition condition for changing a state of the PCI device from the D0 state to the D3 state is lapse of time. The condition corresponds to a case where a power mode of the MFP 101 is the waiting/responding mode (S0), and a predetermined period of time has elapsed while the PCI device is in an idling state. The state of the PCI device frequently changes between the D0 state and the D3 state when compared with a change of the power mode of the MFP 101. The predetermined period of time may be set in a range from several seconds to several milliseconds.

Next, in Table 8, return conditions for returning the PCI device from the D3 state to the D0 state in the waiting/responding mode (S0) are illustrated.

**Table 8**

| Return Conditions of PCI device (Waiting/Responding Mode) | |
|---|---|
| Return Conditions | Description |
| Detection of Return Cause by CPU | The CPU detects a return cause. |
| Detection of Return Cause by Device | The device detects a return cause. |

A condition for returning the PCI device from the D3 state to the D0 state corresponds to a case where the CPU 301 detects a return cause or a case where the PCI device detects a return cause. Specifically, the PCI device in the D3 state may return to the D0 state by either of the CPU 301 and the PCI device.

In Table 7, the detection of a return cause by the CPU indicates a case where the CPU 301 detects a return cause. The case corresponds to a timing when the power state of the MFP 101 is changed from the waiting/responding mode to the standby mode. Specifically, when the power source control application A1 changes the power state of the MFP 101 from the waiting/responding mode to the standby mode, the device driver executed by the CPU 301 changes a state of the PCI device from the D3 state to the D0 state. Furthermore, when a setting of the PCI device is to be changed or when information on the PCI device is to be obtained, the device driver accesses the PCI device. In this case, the device driver changes the state of the PCI device from the D3 state to the D0 state. For example, the LAN controller 307 may transmit information to the external apparatus 102 through the network 103 at a predetermined time point. When a current time measured by the clock unit 414 reaches the predetermined time point, an interrupt signal is input to the CPU 301. When the interrupt signal is input, the CPU 301 updates a value of the register included in the PCI device. By this, the PCI device returns from the D3 state to the D0 state. As a result, the LAN controller 307 may transmit information to the external apparatus 102.

Furthermore, in Table 7, the detection of a return cause by the device indicates a case where the PCI device detects a return cause. The case corresponds to a timing when the LAN controller 307 receives data from the external apparatus 102 through the network 103 or at a timing when the USB I/F 428 detects a USB device, for example. When detecting a return cause, the PCI device outputs an interrupt signal to the CPU 301 in an out bound (outside the PCIe bus). When the interrupt signal is input, the CPU 301 updates a value of the register included in the PCI device. By this, the PCI device returns from the D3 state to the D0 state.

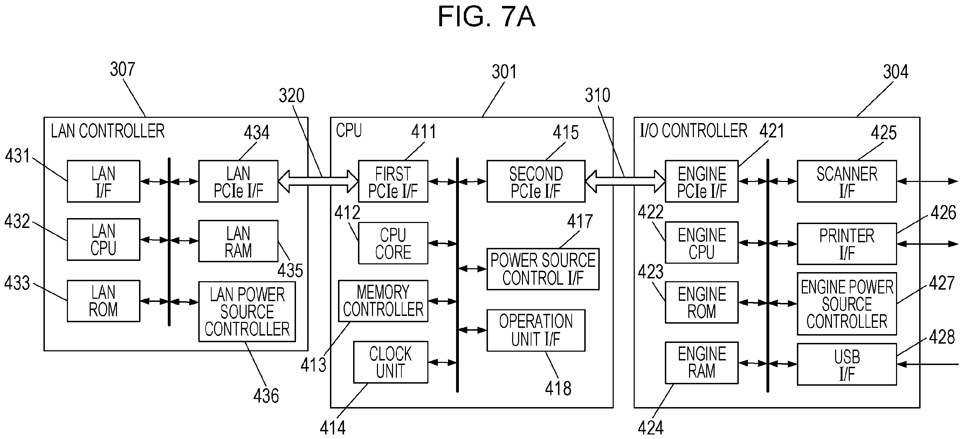

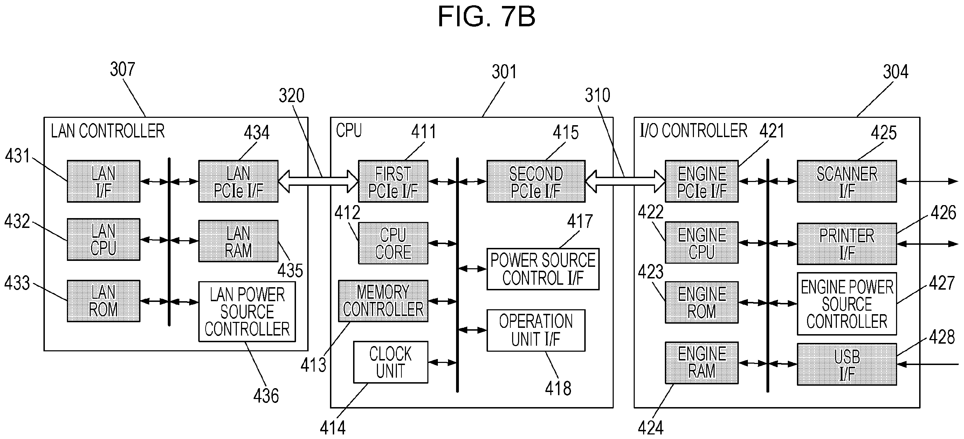

Fig. 7A is a diagram illustrating the PCI devices in an active state in the waiting/responding mode (S0), and Fig. 7B is a diagram illustrating the PCI devices in a low power state in the waiting/responding mode (S0).

In the active state, as illustrated in Fig. 7A, the CPU 301 is in a C0 state and the PCI devices are in the D0 state. Specifically, in the active state, electric power is supplied to the units of the CPU 301, the units of the I/O controller 304, and the units of the LAN controller 307.

In the low power state, as illustrated in Fig. 7B, the CPU 301 is in a C10 state and the PCI devices are in the D3 state. Note that the general-purpose memory 303 connected to the CPU 301 is in a self-refresh state. In the low power state, the first PCIe I/F 411, the CPU core 412, the memory controller 413, and the second PCIe I/F 415 included in the CPU 301 are in a power saving state. The power saving state corresponds to stop of power supply, stop of a supply clock, or lowering of a frequency of the supply clock. In the low power state, the engine PCIe I/F 421, the engine CPU 422, the engine ROM 423, the engine RAM 424, the scanner I/F 425, the printer I/F 426, and the USB I/F 428 included in the I/O controller 304 are in a power saving state. Furthermore, in the low power state, the LAN I/F 431, the LAN CPU 432, the LAN ROM 433, the LAN PCIe I/F 434, and the LAN RAM 435 included in the LAN controller 307 are in a power saving state.

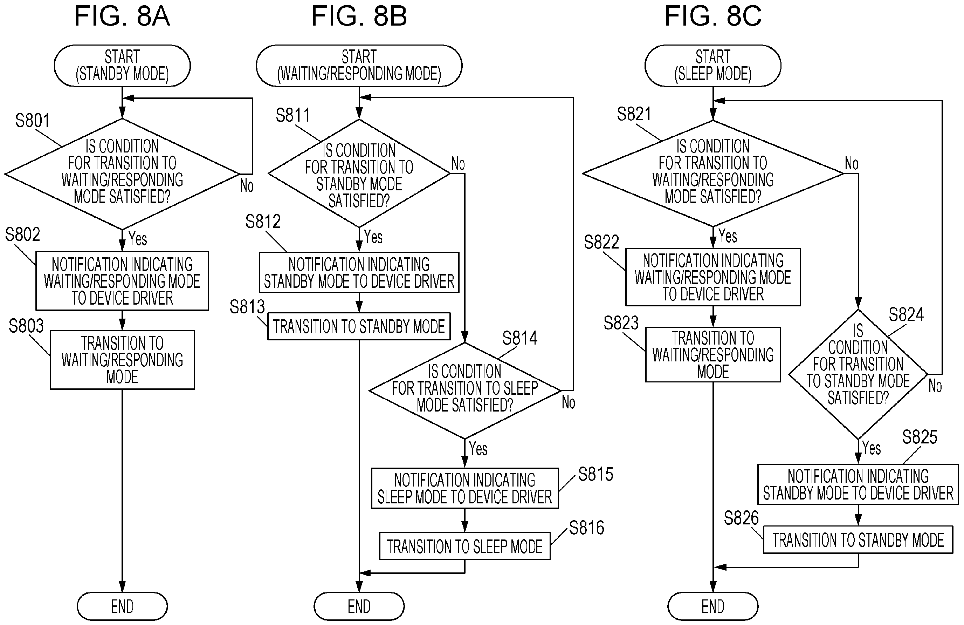

Figs. 8A to 8C are flowcharts illustrating processes of the power source control application A1. The CPU 301 which executes the power source control application A1 executes processes in the flowcharts of Figs. 8A to 8C.

As illustrated in Fig. 8A, when the MFP 101 is in the standby mode (S0), the CPU 301 determines whether one of the conditions for transition to the waiting/responding mode is satisfied (S801). The conditions for transition to the waiting/responding mode are included in Table 1. When the determination is affirmative (S801: Yes), the CPU 301 notifies the device driver of information indicating the waiting/responding mode (S802). Thereafter, the CPU 301 brings the MFP 101 into the waiting/responding mode (S0) by stopping the power supply to the printer unit 107 and the scanner unit 106 (S803).

As illustrated in Fig. 8B, when the MFP 101 is in the waiting/responding mode (S0), the CPU 301 determines whether one of the conditions for transition to the standby mode is satisfied (S811). The conditions for transition to the standby mode are included in in Table 3. When the determination is affirmative (S811: Yes), the CPU 301 notifies the device driver of information indicating the standby mode (S812). Thereafter, the CPU 301 brings the MFP 101 into the standby mode (S0) by performing control such that electric power is supplied to the printer unit 107 and the scanner unit 106 (S813).

When the determination is negative (S811: No), the CPU 301 determines whether one of the conditions for transition to the sleep mode (S3) is satisfied (S814). The conditions for transition to the sleep mode are included in Table 2. When the determination is affirmative (S814: Yes), the CPU 301 notifies the device driver of information indicating the sleep mode (S815). Thereafter, the CPU 301 brings the MFP 101 into the sleep mode (S3) by performing control such that power supply to the CPU 301 itself is stopped (S816).

In a case where the MFP 101 is in the sleep mode as illustrated in Fig. 8C, when one of the return conditions in Table 4 is detected, the power source controller 201 supplies electric power to the CPU 301. The CPU 301 which has received the electric power checks the return condition latched by the power source controller 201. The CPU 301 determines whether the checked return condition corresponds to a condition for return to the waiting/responding mode (S821). The condition for return to the waiting/responding mode corresponds to the conditions in Table 4 described above other than "Reception of Print Job". When the determination is affirmative (S821: Yes), the CPU 301 notifies the device driver of information indicating the waiting/responding mode (S822). Thereafter, the CPU 301 brings the MFP 101 into the waiting/responding mode (S0) (S823).

When the checked return condition does not correspond to a condition for return to the waiting/responding mode but the checked return condition corresponds to a condition for return to the standby mode (S821: No, S824: Yes), the CPU 301 notifies the device driver of information indicating the standby mode (S825). Thereafter, the CPU 301 brings the MFP 101 into the standby mode (S0) by performing control such that electric power is supplied to the printer unit 107 and the scanner unit 106 (S826). Note that the condition for return to the standby mode corresponds to "Reception of Print Job" in Table 4, and therefore, power supply to the scanner unit 106 may not be performed.

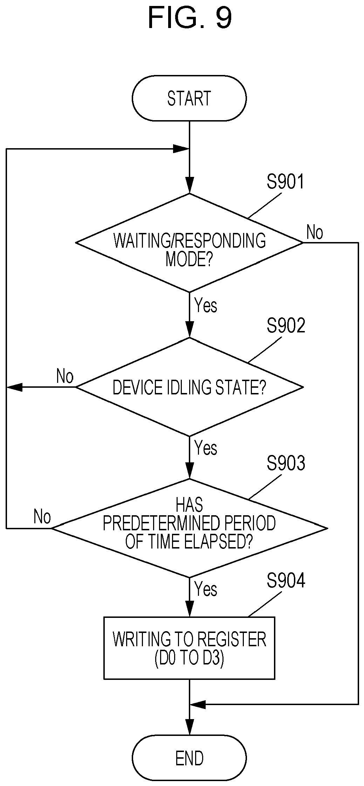

Fig. 9 is a flowchart illustrating a process performed by the device driver.

The CPU 301 executes the device drivers of the PCI devices so as to execute various processes in the flowchart of Fig. 9.

First, the CPU 301 determines whether the power mode of the MFP 101 is the waiting/responding mode (S901). When it is determined that the CPU 301 is in the standby mode in step S901, the CPU 301 does not execute a process of bringing the PCI device into the D3 state and terminates the process of this flowchart (S901: No).

When it is determined that the CPU 301 is in the waiting/responding mode in step S901, the CPU 301 determines whether the PCI device is in an idling state (S902). When it is determined that the PCI device has been in the idling state for a predetermined period of time (S903: Yes), the CPU 301 updates a value of the register included in the PCI device by a value indicating the D3 state. In this way, the processor included in the PCI device brings the PCI device into the D3 state.

As described above, according to this embodiment, even in a case where the controller unit 104 is in the S0 state, a determination as to whether Runtime D3 is to be executed is made in accordance with a power mode of the MFP 101. Specifically, the PCI device may be maintained in the D0 state in the standby mode in which responsiveness is required, whereas the PCI device may be brought into the D3 state from the D0 state in the waiting/responding mode in which power saving is preferentially performed.

In this way, the responsiveness may be enhanced at a time of job execution in the standby mode, and power saving may be realized in the waiting/responding mode.

### Second Embodiment

In the first embodiment, power states of all the PCI devices may be maintained in the D0 state when the power mode of the MFP 101 is the standby mode, and the power states of all the PCI devices may be brought into the D3 state from the D0 state when the power mode of the MFP 101 is in the waiting/responding mode.

In a second embodiment, a power state of at least one of PCI devices may be maintained in a D0 state when a power mode of an MFP 101 is a standby mode, and a power state of at least one of the PCI devices may be brought into a D3 state from the D0 state when the power mode of the MFP 101 is in the waiting/responding mode. Specifically, a power state of an I/O controller 304 may be maintained in the D0 state when the power mode of the MFP 101 is in the standby mode, and the power state of the I/O controller 304 may be brought into the D3 state from the D0 state when the power mode of the MFP 101 is the waiting/responding mode. On the other hand, a power state of a LAN controller 307 may be brought into the D3 state from the D0 state even when the power mode of the MFP 101 is the standby mode.

Power states of the I/O controller 304 are illustrated in Table 9, and power states of the LAN controller 307 are illustrated in Table 10.

**Table 9**

| Power Control of I/O Controller 304 | | | |
|---|---|---|---|
| | | Power States of Device | |
| | | D0 | D3 |
| Power State of System | Standby Mode | ○ | × |
| | Waiting/Responding Mode | Response | ○ |
| | Sleep Mode | off | |
| | Power Off | off | |

As illustrated in Table 9, the I/O controller 304 is in the D0 state in the standby mode and is in the D0 state or the D3 state in the waiting/responding mode.

**Table 10**

| Power Control of LAN Controller 307 | | | |
|---|---|---|---|
| | | Power States of Device | |
| | | D0 | D3 |
| Power State of System | Standby Mode | ○ | No LINK |
| | Waiting/Responding Mode | Response | ○ |
| | Sleep Mode | × | ○ |
| | Power Off | off | |

Unlike the I/O controller 304, the LAN controller 307 is in the D0 state or the D3 state in the standby mode as illustrated in Table 10. Specifically, the LAN controller 307 is brought into the D3 state when a LAN cable is not physically connected or when a link pulse signal is not received. Furthermore, the LAN controller 307 is in the D0 state when responding to a received packet in the waiting/responding mode and is in the D3 state at a time of waiting. Specifically, the LAN controller 307 is maintained in the D3 state when a LAN cable is not physically connected or when a link pulse signal is not received.

As described above, in the second embodiment, a state of one of the PCI devices may be changed between the D0 state and the D3 state and the other devices may not be brought into the D3 state when the MFP 101 is in the standby mode. That is, in the second embodiment, a device driver of the I/O controller 304 determines whether Runtime D3 is to be executed in accordance with a power mode of the MFP 101. On the other hand, a device driver of the LAN controller 307 executes Runtime D3 irrespective of the power mode of the MFP 101.

Furthermore, in the second embodiment, a result of the determination as to whether Runtime D3 is to be executed is changed in accordance with a use state of the device. By this, the PCI device is prevented from being maintained in the D0 state in a state in which the PCI device is not used and the PCI device may be brought into the D3 state.

### Other Embodiments

Although the MFP 101 is described as the information processing apparatus of the present invention in the foregoing embodiments, the information processing apparatus may be a personal computer or a server.

Furthermore, the present invention may be realized when a recording medium which records a program code of software which realizes the functions of the foregoing embodiment is supplied to a system or an apparatus. In this case, a computer (or a CPU or an MPU) of the system or the apparatus reads and executes the program code stored in the recording medium so as to realize the functions. Note that the recording medium which stores the program code is included in the present invention.

Examples of the recording medium which supplies the program code include a flexible disk, a hard disk, an optical disc, a magneto-optical disc, a CD-ROM, a CD-R, a magnetic tape, a nonvolatile memory card, and a ROM.

Furthermore, the present invention is not limited to a case where the functions of the foregoing embodiments are realized when the computer executes the read program code. The present invention also includes a case where the functions of the foregoing embodiments are realized when an operating system (OS) or the like operating in the computer performs a portion or all of an actual process.

Furthermore, the present invention also includes a case where the functions of the foregoing embodiments are realized after the program code read from the recording medium is written in a memory included in a function expansion board inserted into the computer or a function expansion unit connected to the computer. Specifically, the present invention includes a case where the functions of the foregoing embodiments are realized when a CPU or the like included in the function expansion board or the function expansion unit performs a portion or all of the actual process in accordance with the program code after the program code is written in the memory.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

It is common general knowledge in the field of electronics that power is defined as a rate of use of energy. Thus a unit of power corresponds to a unit of energy per unit time. It is well-known that the concept of power consumption corresponds to energy consumption. Consequently, a low power consumption corresponds to a low consumption of energy per unit time.

## Claims

1. A multifunction peripheral device (101) comprising:
processing means (301);
a peripheral component interconnect "PCI" device (304, 307) connected to the processing means (301) through a peripheral component interconnect "PCI" bus (310, 320); and
power control means (201) configured to control a power mode of the multifunction peripheral device (101),
wherein the processing means (301) performs control such that a state of the peripheral component interconnect "PCI" device (304, 307) is changed between a first power state and a second power state in which less electric power is consumed than in the first power state,
wherein the processing means (301) determines whether the power state of the peripheral component interconnect "PCI" device (304, 307) is to be changed in accordance with the power mode of the multifunction peripheral device (101),
wherein the power control means (201) is configured to notify the processing means (301) of the power mode of the multifunction peripheral device (101), and
wherein the processing means (301) is configured to determine whether the power state of the peripheral component interconnect "PCI" device (304, 307) is to be changed in accordance with the notified power mode of the multifunction peripheral device (101).

2. The multifunction peripheral device (101) according to Claim 1, wherein the processing means (301) fixes the peripheral component interconnect "PCI" device (304, 307) in the first state when the power mode of the multifunction peripheral device (101) is a first mode, whereas the processing means (301) changes the power state of the peripheral component interconnect "PCI" device (304, 307) when the power mode of the multifunction peripheral device (101) is a second mode.

3. The multifunction peripheral device (101) according to Claim 2, wherein less power is consumed in the second mode than the first mode.

4. The multifunction peripheral device (101) according to any one of Claims 1 to 3,
wherein the processing means (301) is configured to write a value indicating the first power state or a value indicating the second power state in a register included in the peripheral component interconnect "PCI" device (304, 307), and
wherein the peripheral component interconnect "PCI" device (304, 307) is configured to control the power state of the peripheral component interconnect "PCI" device (304, 307) in accordance with the value of the register.

5. The multifunction peripheral device (101) according to any one of Claims 1 to 4, wherein the peripheral component interconnect "PCI" bus (310, 320) conforms to the peripheral component interconnect "PCI" Express standard and the peripheral component interconnect "PCI" device (304, 307) is compatible with the peripheral component interconnect "PCI" Express standard.

6. The multifunction peripheral device (101) according to any one of Claims 1 to 3, wherein the processing means (301) is configured to execute a device driver which controls operation of the peripheral component interconnect "PCI" device (304, 307), and the device driver is configured to change a state of the peripheral component interconnect "PCI" device (304, 307) between the first and second power states.

7. The multifunction peripheral device (101) according to Claim 6, wherein the device driver is configured to operate in an operating system "OS" layer.

8. The multifunction peripheral device (101) according to any one of Claims 1 to 7, wherein the processing means (301) is configured to execute a power source control application operating in an application layer, and the power control means (201) is configured to control the power mode of the multifunction peripheral device (101) in accordance with an instruction issued by the power source control application.

9. The multifunction peripheral device (101) according to any one of Claims 1 to 8, wherein the processing means (301) is configured to change the state of the peripheral component interconnect "PCI" device (304, 307) between the first and second power states in accordance with a state of the peripheral component interconnect "PCI" device (304, 307).

10. An information processing apparatus including a processing means (301) and a peripheral component interconnect "PCI" device (304, 307) connected to the processing means (301) through a peripheral component interconnect "PCI" bus (310, 320), the information processing apparatus comprising:
device control means (D1, D2) configured to change a state of the peripheral component interconnect "PCI" device (304, 307) between a first power state and a second power state in which less electric power is consumed than in the first power state in a standby state in which electric power is supplied to the processing means (301); and
power mode control means (A1) configured to control a power mode of the information processing apparatus in the standby state in which electric power is supplied to the processing means (301),
wherein the device control means (D1, D2) is configured to maintain a power state of the peripheral component interconnect "PCI" device (304, 307) in the first power state when a power mode of the information processing apparatus in the standby state controlled by the power mode control means (A1) is a first power mode, and the device control means (D1, D2) is configured to change the power state of the peripheral component interconnect "PCI" device (304, 307) between the first and second power states when the power mode of the information processing apparatus in the standby state controlled by the power mode control means (A1) is a second power mode in which less electric power is consumed than in the first power mode,
wherein the power mode control means (A1) is configured to notify the device control means (D1, D2) of information on the power mode of the information processing apparatus, and
wherein the device control means (D1, D2) is configured to control the power state of the peripheral component interconnect "PCI" device (304, 307) in accordance with the notified power mode of the information processing apparatus.

11. The information processing apparatus according to Claim 10,
wherein the device control means (D1, D2) is configured to write a value indicating the first power state or a value indicating the second power state in a register included in the peripheral component interconnect "PCI" device (304, 307), and
wherein the peripheral component interconnect "PCI" device (304, 307) is configured to control the power state of the peripheral component interconnect "PCI" device (304, 307) in accordance with the value of the register.

12. The information processing apparatus according to Claim 10 or Claim 11, wherein the peripheral component interconnect "PCI" bus (310, 320) conforms to the peripheral component interconnect "PCI" Express standard and the peripheral component interconnect "PCI" device (304, 307) is compatible with the peripheral component interconnect "PCI" Express standard.

13. The information processing apparatus according to any one of Claims 10 to 12, wherein the device control means (D1, D2) includes a device driver which is configured to control operation of the peripheral component interconnect "PCI" device (304, 307), and the device driver is configured to change a state of the peripheral component interconnect "PCI" device (304, 307) between the first and second power states in the standby state in which electric power is supplied to the processing means (301).

14. The information processing apparatus according to Claim 13, wherein the device driver is configured to operate in an operating system "OS" layer.

15. The information processing apparatus according to Claim 14, wherein the power mode control means (A1) includes a power source control application configured to operate in an application layer, and the power mode control means (A1) is configured to bring a power mode of the information processing apparatus into the first power mode or the second power mode.

16. The information processing apparatus according to any one of Claims 10 to 15, wherein the device control means (D1, D2) is configured to change the state of the peripheral component interconnect "PCI" device (304, 307) between the first and second power states in accordance with the state of the peripheral component interconnect "PCI" device (304, 307).

17. The information processing apparatus according to any one of Claims 10 to 16, further comprising a printer unit (107) configured to form an image on a sheet.

18. A method for controlling an information processing apparatus including processing means (301) and a peripheral component interconnect "PCI" device (304, 307) connected to the processing means (301) through a peripheral component interconnect "PCI" bus (310, 320), the method comprising:
controlling a power mode of the information processing apparatus in a standby state in which electric power is supplied to the processing means (301);
maintaining a power state of the peripheral component interconnect "PCI" device (304, 307) in a first power state when a power mode of the information processing apparatus in the standby state is a first power mode, and changing the power state of the peripheral component interconnect "PCI" device (304, 307) between the first power state and a second power state in which less electric power is consumed than in the first power mode when the power mode of the information processing apparatus in the standby state is a second power mode in which less electric power is consumed than in the first power mode; and
controlling the power state of the peripheral component interconnect "PCI" device (304, 307) in accordance with a notified power mode of the information processing apparatus.

19. A program that, when implemented by a multifunction peripheral device (101), causes the multifunction peripheral device (101) to perform a method according to Claim 18.

20. A program that, when implemented by an information processing apparatus, causes the information processing apparatus to perform a method according to Claim 18.

21. A computer-readable storage medium storing a program according to Claim 19 or Claim 20.

## Patentansprüche

1. Multifunktionsperipherievorrichtung (101) umfassend:
eine Verarbeitungseinrichtung (301);
eine Peripheral Component Interconnect "PCI" - Vorrichtung (304, 307), die über einen Peripheral Component Interconnect "PCI" - Bus (310, 320) mit der Verarbeitungseinrichtung (301) verbunden ist; sowie
eine Energieversorgungsteuerungseinrichtung (201), die eingerichtet ist, um einen Energieversorgungsmodus der Multifunktionsperipherievorrichtung (101) zu steuern,
wobei die Verarbeitungseinrichtung (301) eine Steuerung derart durchführt, dass ein Zustand der Peripheral Component Interconnect "PCI" - Vorrichtung (304, 307) zwischen einem ersten Energieversorgungszustand und einem zweiten Energieversorgungszustand, in dem weniger elektrische Leistung als im ersten Energieversorgungszustand verbraucht wird, geändert wird,
wobei die Verarbeitungseinrichtung (301) bestimmt, ob der Energieversorgungszustand der Peripheral Component Interconnect "PCI" - Vorrichtung (304, 307) gemäß dem Energieversorgungsmodus der Multifunktionsperipherievorrichtung (101) geändert werden soll,
wobei die Energieversorgungsteuerungseinrichtung (201) eingerichtet ist, um der Verarbeitungseinrichtung (301) den Energieversorgungsmodus der Multifunktionsperipherievorrichtung (101) mitzuteilen, und
wobei die Verarbeitungseinrichtung (301) eingerichtet ist, um zu bestimmen, ob der Energieversorgungszustand der Peripheral Component Interconnect "PCI" - Vorrichtung (304, 307) gemäß dem mitgeteilten Energieversorgungsmodus der Multifunktionsperipherievorrichtung (101) geändert werden soll.

2. Multifunktionsperipherievorrichtung (101) nach Anspruch 1,
wobei die Verarbeitungseinrichtung (301) die Peripheral Component Interconnect "PCI" - Vorrichtung (304, 307) im ersten Zustand festhält, wenn der Energieversorgungsmodus der Multifunktionsperipherievorrichtung (101) ein erster Modus ist, wogegen die Verarbeitungseinrichtung (301) den Energieversorgungszustand der Peripheral Component Interconnect "PCI" - Vorrichtung (304, 307) ändert, wenn der Energieversorgungsmodus der Multifunktionsperipherievorrichtung (101) ein zweiter Modus ist.

3. Multifunktionsperipherievorrichtung (101) nach Anspruch 2,
wobei im zweiten Modus weniger Leistung als im ersten Modus verbraucht wird.

4. Multifunktionsperipherievorrichtung (101) nach einem der Ansprüche 1 bis 3,
wobei die Verarbeitungseinrichtung (301) eingerichtet ist, um einen den ersten Energieversorgungszustand anzeigenden Wert oder einen den zweiten Energieversorgungszustand anzeigenden Wert in ein Register zu schreiben, das in der Peripheral Component Interconnect "PCI" - Vorrichtung (304, 307) enthalten ist, und
wobei die Peripheral Component Interconnect "PCI" - Vorrichtung (304, 307) eingerichtet ist, um den Energieversorgungszustand der Peripheral Component Interconnect "PCI" - Vorrichtung (304, 307) gemäß dem Wert des Registers zu steuern.

5. Multifunktionsperipherievorrichtung (101) nach einem der Ansprüche 1 bis 4,
wobei der Peripheral Component Interconnect "PCI" - Bus (310, 320) dem Peripheral Component Interconnect "PCI" Express - Standard entspricht und die Peripheral Component Interconnect "PCI" - Vorrichtung (304, 307) zum Peripheral Component Interconnect "PCI" Express - Standard kompatibel ist.

6. Multifunktionsperipherievorrichtung (101) nach einem der Ansprüche 1 bis 3,
wobei die Verarbeitungseinrichtung (301) eingerichtet ist, um einen Gerätetreiber auszuführen, der einen Betrieb der Peripheral Component Interconnect "PCI" - Vorrichtung (304, 307) steuert, und der Gerätetreiber eingerichtet ist, um einen Zustand der Peripheral Component Interconnect "PCI" - Vorrichtung (304, 307) zwischen den ersten und zweiten Energieversorgungszuständen zu ändern.

7. Multifunktionsperipherievorrichtung (101) nach Anspruch 6,
wobei der Gerätetreiber eingerichtet ist, um auf einer Betriebssystem "OS" - Ebene zu arbeiten.

8. Multifunktionsperipherievorrichtung (101) nach einem der Ansprüche 1 bis 7,
wobei die Verarbeitungseinrichtung (301) eingerichtet ist, um eine auf einer Anwendungsebene arbeitende Energiequellensteuerungsanwendung auszuführen, und die Energieversorgungsteuerungseinrichtung (201) eingerichtet ist, um den Energieversorgungsmodus der Multifunktionsperipherievorrichtung (101) gemäß einem durch die Energiequellensteuerungsanwendung ausgegebenen Befehl zu steuern.

9. Multifunktionsperipherievorrichtung (101) nach einem der Ansprüche 1 bis 8,
wobei die Verarbeitungseinrichtung (301) eingerichtet ist, um den Zustand der Peripheral Component Interconnect "PCI" - Vorrichtung (304, 307) zwischen den ersten und zweiten Energieversorgungszuständen gemäß einem Zustand der Peripheral Component Interconnect "PCI" - Vorrichtung (304, 307) zu ändern.

10. Informationsverarbeitungsvorrichtung, die eine Verarbeitungseinrichtung (301) sowie eine Peripheral Component Interconnect "PCI" - Vorrichtung (304, 307), die über einen Peripheral Component Interconnect "PCI" - Bus (310, 320) mit der Verarbeitungseinrichtung (301) verbunden ist, beinhaltet, wobei die Informationsverarbeitungsvorrichtung umfasst:
eine Vorrichtungssteuerungseinrichtung (D1, D2), die eingerichtet ist, um in einem Bereitschaftszustand, in dem der Verarbeitungseinrichtung (301) elektrische Leistung zugeführt wird, einen Zustand der Peripheral Component Interconnect "PCI" - Vorrichtung (304, 307) zwischen einem ersten Energieversorgungszustand und einem zweiten Energieversorgungszustand, in dem weniger elektrische Leistung als im ersten Energieversorgungszustand verbraucht wird, zu ändern; sowie
eine Energieversorgungsmodus-Steuerungseinrichtung (A1), die eingerichtet ist, um einen Energieversorgungsmodus der Informationsverarbeitungsvorrichtung im Bereitschaftszustand zu steuern, in dem der Verarbeitungseinrichtung (301) elektrische Leistung zugeführt wird,
wobei die Vorrichtungssteuerungseinrichtung (D1, D2) eingerichtet ist, um einen Energieversorgungszustand der Peripheral Component Interconnect "PCI" - Vorrichtung (304, 307) im ersten Energieversorgungszustand aufrechtzuhalten, wenn ein Energieversorgungsmodus der Informationsverarbeitungsvorrichtung in dem durch die Energieversorgungsmodus-Steuerungseinrichtung (A1) gesteuerten Bereitschaftszustand ein erster Energieversorgungsmodus ist, und die Vorrichtungssteuerungseinrichtung (D1, D2) weiter eingerichtet ist, um den Energieversorgungszustand der Peripheral Component Interconnect "PCI" - Vorrichtung (304, 307) zwischen den ersten und zweiten Energieversorgungszuständen zu ändern, wenn der Energieversorgungsmodus der Informationsverarbeitungsvorrichtung in dem durch die Energieversorgungsmodus-Steuerungseinrichtung (A1) gesteuerten Bereitschaftszustand ein zweiter Energieversorgungsmodus ist, in dem weniger elektrische Leistung als im ersten Energieversorgungsmodus verbraucht wird,
wobei die Energieversorgungsmodus-Steuerungseinrichtung (A1) eingerichtet ist, um der Vorrichtungssteuerungseinrichtung (D1, D2) Information über den Energieversorgungsmodus der Informationsverarbeitungsvorrichtung mitzuteilen, und
wobei die Vorrichtungssteuerungseinrichtung (D1, D2) eingerichtet ist, um den Energieversorgungszustand der Peripheral Component Interconnect "PCI" - Vorrichtung (304, 307) gemäß dem mitgeteilten Energieversorgungsmodus der Informationsverarbeitungsvorrichtung zu steuern.

11. Informationsverarbeitungsvorrichtung nach Anspruch 10,
wobei die Vorrichtungssteuerungseinrichtung (D1, D2) eingerichtet ist, um einen den ersten Energieversorgungszustand anzeigenden Wert oder einen den zweiten Energieversorgungszustand anzeigenden Wert in ein Register zu schreiben, das in der Peripheral Component Interconnect "PCI" - Vorrichtung (304, 307) enthalten ist, und
wobei die Peripheral Component Interconnect "PCI" - Vorrichtung (304, 307) eingerichtet ist, um den Energieversorgungszustand der Peripheral Component Interconnect "PCI" - Vorrichtung (304, 307) gemäß dem Wert des Registers zu steuern.

12. Informationsverarbeitungsvorrichtung nach Anspruch 10 oder Anspruch 11,
wobei der Peripheral Component Interconnect "PCI" - Bus (310, 320) dem Peripheral Component Interconnect "PCI" Express - Standard entspricht und die Peripheral Component Interconnect "PCI" - Vorrichtung (304, 307) zum Peripheral Component Interconnect "PCI" Express - Standard kompatibel ist.

13. Informationsverarbeitungsvorrichtung nach einem der Ansprüche 10 bis 12,
wobei die Vorrichtungssteuerungseinrichtung (D1, D2) einen Gerätetreiber beinhaltet, der eingerichtet ist, um einen Betrieb der Peripheral Component Interconnect "PCI" - Vorrichtung (304, 307) zu steuern, und der Gerätetreiber weiter eingerichtet ist, um im Bereitschaftszustand, in dem der Verarbeitungseinrichtung (301) elektrische Leistung zugeführt wird, einen Zustand der Peripheral Component Interconnect "PCI" - Vorrichtung (304, 307) zwischen den ersten und zweiten Energieversorgungszuständen zu ändern.

14. Informationsverarbeitungsvorrichtung nach Anspruch 13,
wobei der Gerätetreiber eingerichtet ist, um auf einer Betriebssystem "OS" - Ebene zu arbeiten.

15. Informationsverarbeitungsvorrichtung nach Anspruch 14,
wobei die Energieversorgungsmodus-Steuerungseinrichtung (A1) eine Energiequellensteuerungsanwendung beinhaltet, die eingerichtet ist, um auf einer Anwendungsebene zu arbeiten, und die Energieversorgungsmodus-Steuerungseinrichtung (A1) weiter eingerichtet ist, um einen Energieversorgungsmodus der Informationsverarbeitungsvorrichtung in den ersten Energieversorgungsmodus oder den zweiten Energieversorgungsmodus zu bringen.

16. Informationsverarbeitungsvorrichtung nach einem der Ansprüche 10 bis 15,
wobei die Vorrichtungssteuerungseinrichtung (D1, D2) eingerichtet ist, um den Zustand der Peripheral Component Interconnect "PCI" - Vorrichtung (304, 307) zwischen den ersten und zweiten Energieversorgungszuständen gemäß dem Zustand der Peripheral Component Interconnect "PCI" - Vorrichtung (304, 307) zu ändern.

17. Informationsverarbeitungsvorrichtung nach einem der Ansprüche 10 bis 16,
weiterhin umfassend eine Druckereinheit (107), die eingerichtet ist, um ein Bild auf einem Bogen zu erzeugen.

18. Verfahren zum Steuern einer Informationsverarbeitungsvorrichtung, die eine Verarbeitungseinrichtung (301) sowie eine Peripheral Component Interconnect "PCI" - Vorrichtung (304, 307), die über einen Peripheral Component Interconnect "PCI" - Bus (310, 320) mit der Verarbeitungseinrichtung (301) verbunden ist, beinhaltet, wobei das Verfahren umfasst:
Steuern eines Energieversorgungsmodus der Informationsverarbeitungsvorrichtung in einem Bereitschaftszustand, in dem der Verarbeitungseinrichtung (301) elektrische Leistung zugeführt wird;
Aufrechterhalten eines Energieversorgungszustands der Peripheral Component Interconnect "PCI" - Vorrichtung (304, 307) in einem ersten Energieversorgungszustand, wenn ein Energieversorgungsmodus der Informationsverarbeitungsvorrichtung im Bereitschaftszustand ein erster Energieversorgungsmodus ist, und Ändern des Energieversorgungszustands der Peripheral Component Interconnect "PCI" - Vorrichtung (304, 307) zwischen dem ersten Energieversorgungszustand und einem zweiten Energieversorgungszustand, in dem weniger elektrische Leistung als im ersten Energieversorgungsmodus verbraucht wird, wenn der Energieversorgungsmodus der Informationsverarbeitungsvorrichtung im Bereitschaftszustand ein zweiter Energieversorgungsmodus ist, in dem weniger elektrische Leistung als im ersten Energieversorgungsmodus verbraucht wird; sowie
Steuern des Energieversorgungszustands der Peripheral Component Interconnect "PCI" - Vorrichtung (304, 307) gemäß einem mitgeteilten Energieversorgungsmodus der Informationsverarbeitungsvorrichtung.

19. Programm, das, wenn es durch ein Multifunktionsperipherievorrichtung (101) implementiert wird, die Multifunktionsperipherievorrichtung (101) veranlasst, ein Verfahren nach Anspruch 18 durchzuführen.

20. Programm, das, wenn es durch eine Informationsverarbeitungsvorrichtung implementiert wird, die Informationsverarbeitungsvorrichtung veranlasst, ein Verfahren nach Anspruch 18 durchzuführen.

21. Computerlesbares Speichermedium, das ein Programm nach Anspruch 19 oder Anspruch 20 speichert.

## Revendications

1. Dispositif périphérique multifonction (101), comprenant :
un moyen de traitement (301) ;
un dispositif d'interconnexion de composants périphériques « PCI » (304, 307) connecté au moyen de traitement (301) par l'intermédiaire d'un bus d'interconnexion de composants périphériques « PCI » (310, 320) ; et
un moyen de commande de puissance (201) configuré pour commander un mode de puissance du dispositif périphérique multifonction (101),
dans lequel le moyen de traitement (301) exécute une commande telle qu'un état du dispositif d'interconnexion de composants périphériques « PCI » (304, 307) est commuté entre un premier état de puissance et un second état de puissance dans lequel moins de puissance électrique est consommée que dans le premier état de puissance,
dans lequel le moyen de traitement (301) détermine s'il convient de commuter l'état de puissance du dispositif d'interconnexion de composants périphériques « PCI » (304, 307) conformément au mode de puissance du dispositif périphérique multifonction (101),
dans lequel le moyen de commande de puissance (201) est configuré pour notifier le mode de puissance du dispositif périphérique multifonction (101) au moyen de traitement (301), et
dans lequel le moyen de traitement (301) est configuré pour déterminer s'il convient de commuter l'état de puissance du dispositif d'interconnexion de composants périphériques « PCI » (304, 307) conformément au mode de puissance notifié du dispositif périphérique multifonction (101) .

2. Dispositif périphérique multifonction (101) selon la revendication 1, dans lequel le moyen de traitement (301) instaure le dispositif d'interconnexion de composants périphériques « PCI » (304, 307) dans le premier état lorsque le mode de puissance du dispositif périphérique multifonction (101) est un premier mode, tandis que le moyen de traitement (301) commute l'état de puissance du dispositif d'interconnexion de composants périphériques « PCI » (304, 307) lorsque le mode de puissance du dispositif périphérique multifonction (101) est un second mode.

3. Dispositif périphérique multifonction (101) selon la revendication 2, dans lequel moins de puissance est consommée dans le second mode que dans le premier mode.

4. Dispositif périphérique multifonction (101) selon l'une quelconque des revendications 1 à 3,
dans lequel le moyen de traitement (301) est configuré pour écrire une valeur indiquant le premier état de puissance ou une valeur indiquant le second état de puissance dans un registre compris dans le dispositif d'interconnexion de composants périphériques « PCI » (304, 307), et
dans lequel le dispositif d'interconnexion de composants périphériques « PCI » (304, 307) est configuré pour commander l'état de puissance du dispositif d'interconnexion de composants périphériques « PCI » (304, 307) conformément à la valeur du registre.

5. Dispositif périphérique multifonction (101) selon l'une quelconque des revendications 1 à 4, dans lequel le bus d'interconnexion de composants périphériques « PCI » (310, 320) est conforme à la norme d'interconnexion de composants périphériques « PCI » Express et le dispositif d'interconnexion de composants périphériques « PCI » (304, 307) est compatible avec la norme d'interconnexion de composants périphériques « PCI » Express.

6. Dispositif périphérique multifonction (101) selon l'une quelconque des revendications 1 à 3, dans lequel le moyen de traitement (301) est configuré pour exécuter un pilote de dispositif qui commande le fonctionnement du dispositif d'interconnexion de composants périphériques « PCI » (304, 307), et le pilote de dispositif est configuré pour commuter un état du dispositif d'interconnexion de composants périphériques « PCI » (304, 307) entre les premier et second états de puissance.

7. Dispositif périphérique multifonction (101) selon la revendication 6, dans lequel le pilote de dispositif est configuré pour fonctionner dans une couche de système d'exploitation « OS ».

8. Dispositif périphérique multifonction (101) selon l'une quelconque des revendications 1 à 7, dans lequel le moyen de traitement (301) est configuré pour exécuter une application de commande de source de puissance exploitée dans une couche d'application, et le moyen de commande de puissance (201) est configuré pour commander le mode de puissance du dispositif périphérique multifonction (101) conformément à une instruction émise par l'application de commande de source de puissance.

9. Dispositif périphérique multifonction (101) selon l'une quelconque des revendications 1 à 8, dans lequel le moyen de traitement (301) est configuré pour commuter l'état du dispositif d'interconnexion de composants périphériques « PCI » (304, 307) entre les premier et second états de puissance conformément à un état du dispositif d'interconnexion de composants périphériques « PCI » (304, 307).

10. Appareil de traitement d'informations comprenant un moyen de traitement (301) et un dispositif d'interconnexion de composants périphériques « PCI » (304, 307) connecté au moyen de traitement (301) par l'intermédiaire d'un bus d'interconnexion de composants périphériques « PCI » (310, 320), l'appareil de traitement comprenant :
un moyen de commande de dispositif (D1, D2) configuré pour commuter un état du dispositif d'interconnexion de composants périphériques « PCI » (304, 307) entre un premier état de puissance et un second état de puissance dans lequel moins de puissance électrique est consommée que dans le premier état de puissance dans un état en veille dans lequel de la puissance électrique est fournie au moyen de traitement (301) ; et
un moyen de commande de mode de puissance (A1) configuré pour commander un mode de puissance de l'appareil de traitement d'informations dans l'état en veille dans lequel de la puissance électrique est fournie au moyen de traitement (301),
dans lequel le moyen de commande de dispositif (D1, D2) est configuré pour maintenir un état de puissance du dispositif d'interconnexion de composants périphériques « PCI » (304, 307) dans le premier état de puissance lorsqu'un mode de puissance de l'appareil de traitement d'informations dans l'état en veille commandé par le moyen de commande de mode de puissance (A1) est un premier mode de puissance, et le moyen de commande de dispositif (D1, D2) est configuré pour commuter l'état de puissance du dispositif d'interconnexion de composants périphériques « PCI » (304, 307) entre les premier et second états de puissance lorsque le mode de puissance de l'appareil de traitement d'informations dans l'état en veille commandé par le moyen de commande de mode de puissance (A1) est un second mode de puissance dans lequel moins de puissance électrique est consommée que dans le premier mode de puissance,
dans lequel le moyen de commande de mode de puissance (A1) est configuré pour notifier des informations concernant le mode de puissance de l'appareil de traitement d'informations au moyen de commande de dispositif (D1, D2), et
dans lequel le moyen de commande de dispositif (D1, D2) est configuré pour commander l'état de puissance du dispositif d'interconnexion de composants périphériques « PCI » (304, 307) conformément au mode de puissance notifié de l'appareil de traitement d'informations.

11. Appareil de traitement d'informations selon la revendication 10,
dans lequel le moyen de commande de dispositif (D1, D2) est configuré pour écrire une valeur indiquant le premier état de puissance ou une valeur indiquant le second état de puissance dans un registre compris dans le dispositif d'interconnexion de composants périphériques « PCI » (304, 307), et
dans lequel le dispositif d'interconnexion de composants périphériques « PCI » (304, 307) est configuré pour commander l'état de puissance du dispositif d'interconnexion de composants périphériques « PCI » (304, 307) conformément à la valeur du registre.

12. Appareil de traitement d'informations selon la revendication 10 ou la revendication 11, dans lequel le bus d'interconnexion de composants périphériques « PCI » (310, 320) est conforme à la norme d'interconnexion de composants périphériques « PCI » Express et le dispositif d'interconnexion de composants périphériques « PCI » (304, 307) est compatible avec la norme d'interconnexion de composants périphériques « PCI » Express.

13. Appareil de traitement d'informations selon l'une quelconque des revendications 10 à 12, dans lequel le moyen de commande de dispositif (D1, D2) comprend un pilote de dispositif qui est configuré pour commander un fonctionnement du dispositif d'interconnexion de composants périphériques « PCI » (304, 307), et le pilote de dispositif est configuré pour commuter un état du dispositif d'interconnexion de composants périphériques « PCI » (304, 307) entre les premier et second états de puissance dans l'état en veille dans lequel de la puissance électrique est fournie au moyen de traitement (301).

14. Appareil de traitement d'informations selon la revendication 13, dans lequel le pilote de dispositif est configuré pour fonctionner dans une couche de système d'exploitation « OS ».

15. Appareil de traitement d'informations selon la revendication 14, dans lequel le moyen de commande de mode de puissance (A1) comprend une application de commande de source de puissance configurée pour fonctionner dans une couche d'application, et le moyen de commande de mode de puissance (A1) est configuré pour instaurer un mode de puissance de l'appareil de traitement d'informations dans le premier mode de puissance ou dans le second mode de puissance.

16. Appareil de traitement d'informations selon l'une quelconque des revendications 10 à 15, dans lequel le moyen de commande de dispositif (D1, D2) est configuré pour commuter l'état du dispositif d'interconnexion de composants périphériques « PCI » (304, 307) entre les premier et second états de puissance conformément à l'état du dispositif d'interconnexion de composants périphériques « PCI » (304, 307).

17. Appareil de traitement d'informations selon l'une quelconque des revendications 10 à 16, comprenant en outre une unité imprimante (107) configurée pour former une image sur une feuille.

18. Procédé de commande d'un appareil de traitement d'informations comprenant un moyen de traitement (301) et un dispositif d'interconnexion de composants périphériques « PCI » (304, 307) connecté au moyen de traitement (301) par l'intermédiaire d'un bus d'interconnexion de composants périphériques « PCI » (310, 320), le procédé comprenant les étapes consistant à :
commander un mode de puissance de l'appareil de traitement d'informations dans l'état en veille dans lequel de la puissance électrique est fournie au moyen de traitement (301) ;
maintenir un état de puissance du dispositif d'interconnexion de composants périphériques « PCI » (304, 307) dans un premier état de puissance lorsqu'un mode de puissance de l'appareil de traitement d'informations dans l'état en veille est un premier mode de puissance, et commuter l'état de puissance du dispositif d'interconnexion de composants périphériques « PCI » (304, 307) entre le premier état de puissance et un second état de puissance dans lequel moins de puissance électrique est consommée que dans le premier mode de puissance lorsque le mode de puissance de l'appareil de traitement d'informations dans l'état en veille est un second mode de puissance dans lequel moins de puissance électrique est consommée que dans le premier mode de puissance ; et
commander l'état de puissance du dispositif d'interconnexion de composants périphériques « PCI » (304, 307) conformément à un mode de puissance notifié de l'appareil de traitement d'informations.

19. Programme qui, lorsqu'il est mis en œuvre par un dispositif périphérique multifonction (101), amène le dispositif périphérique multifonction (101) à mettre en œuvre un procédé selon la revendication 18.

20. Programme qui, lorsqu'il est implémenté par un appareil de traitement d'informations, amène l'appareil de traitement d'informations à mettre en œuvre un procédé selon la revendication 18.

21. Support d'informations lisible par ordinateur contenant en mémoire un programme selon la revendication 19 ou la revendication 20.
